(19) **Europäisches Patentamt / European Patent Office / Office européen des brevets**

(11) **EP 2 734 911 B1**

(12) **EUROPEAN PATENT SPECIFICATION**

(45) Date of publication and mention
of the grant of the patent:
**05.09.2018 Bulletin 2018/36**

(21) Application number: **12814409.4**

(22) Date of filing: **19.07.2012**

(51) Int Cl.:
*G06F 3/01* (2006.01)  *H04N 13/00* (2018.01)

(86) International application number:
**PCT/KR2012/005752**

(87) International publication number:
**WO 2013/012257 (24.01.2013 Gazette 2013/04)**

(54) **METHOD AND APPARATUS FOR PROVIDING FEEDBACK IN PORTABLE TERMINAL**

VERFAHREN UND VORRICHTUNG ZUR BEREITSTELLUNG VON FEEDBACKS IN EINEM TRAGBAREN ENDGERÄT

PROCÉDÉ ET APPAREIL DE FOURNITURE D'INFORMATIONS EN RETOUR DANS UN TERMINAL PORTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2011 KR 20110071229**

(43) Date of publication of application:
**28.05.2014 Bulletin 2014/22**

(73) Proprietor: **Samsung Electronics Co., Ltd.**
**Suwon-si, Gyeonggi-do, 443-742 (KR)**

(72) Inventors:
• **LEE, Yeon Hee**
**Seoul 135-282 (KR)**
• **SHIM, Jung Hyun**
**Seongnam-si**
**Gyeonggi-do 463-500 (KR)**
• **LEE, Yong Yeon**
**Suwon-si**
**Gyeonggi-do 443-471 (KR)**

(74) Representative: **Nederlandsch Octrooibureau**
**P.O. Box 29720**
**2502 LS The Hague (NL)**

(56) References cited:
**EP-A1- 1 406 150     EP-A2- 2 124 131**
**WO-A1-2009/085060     WO-A2-2009/028921**
**WO-A2-2010/062117     JP-B2- 4 384 926**

**Description**

**Technical Field**

The present invention relates generally to a method and an apparatus for providing feedback in a portable terminal, and more particularly, to a method and an apparatus for providing feedback in a portable terminal in which different feedback is provided corresponding to a disparity in a three dimensional screen.

**Background Art**

Recently, with the remarkable development of information and communication technology and semiconductor technology, distribution and use of a portable terminal has been expanding rapidly. The portable terminal has become a necessity of modern life, and not only provides standard communication functions such as voice calling or text messaging but also various functions including Television (TV) (for example, mobile broadcasting such as a Digital Multimedia Broadcasting (DMB) or Digital Video Broadcasting (DVB)), music playback (e.g., MPEG Audio Layer-3 (MP3)), camera, data communication, Internet access capability, and a short-range wireless communication function. Further, some recently developed portable terminals provide feedback function to notify a user that a user input (e.g., touch) is detected. For example, such a portable terminal provides a haptic function which, upon detection of the user input, gives feedback to the user that the user input is detected by generating a vibration. In another example, the portable terminal outputs a sound to give feedback to the user that the user input is detected. That is, when the user input is detected, the conventional portable terminal gives feedback that the user input is detected through at least one of generating a vibration or outputting a sound.

Additionally, a portable terminal providing a three dimensional image output function for outputting an image in a three dimensional manner has also been recently developed, capable of providing a three dimensional image that has a cubic and realistic effect by adding spatial information to two dimensional information comprising a width and a length.

An exemplary prior art is disclosed in WO 2009/028921 A2.

**Disclosure of Invention**

**Technical Problem**

However, although the conventional portable terminal provides a cubical and realistic three dimensional image, the conventional portable terminal provides only a monotonous feedback when the user input is detected such that at least one of the sound or the vibration is outputted at a predetermined level. Namely, such a conventional portable terminal does not provide a three dimensional, intuitive, and realistic feedback with respect to the user input when outputting the three dimensional image.

**Solution to Problem**

Accordingly, the present invention has been made to solve the above mentioned problems occurring in the prior art, and the present invention provides a method and an apparatus for providing feedback in a portable terminal in which a three dimensional, intuitive, and realistic feedback with respect to a user input is provided in a three dimensional screen.

According to an aspect of the present invention, there is provided a method and an apparatus for providing feedback in a portable terminal in which different feedbacks are provided corresponding to a disparity when outputting a three dimensional screen.

According to another aspect of the present invention, there is provided a method and an apparatus for providing feedback in a portable terminal in which at least one of an intensity of feedback and a pattern of first feedback is changed according to a change in a disparity in a three dimensional screen to give feedback to the user about the change in the disparity and provides a second feedback to the user to notify when a changed disparity reaches a certain value.

According to an aspect of the present invention, a method of providing feedback corresponding to a user input in a portable terminal includes displaying a three dimensional image on a display panel; determining by a touch panel or an input unit whether the user input corresponding to a content in the three dimensional image is detected; extracting, by a feedback controller when the user input is detected, a disparity of a specific content corresponding to the detected user input; determining by the feedback controller at least one of an intensity of feedback and a pattern of feedback corresponding to the extracted disparity; and providing by a feedback generation unit feedback according to the determination, wherein providing the feedback further comprises increasing the intensity of feedback as a position of the specific content is located closer to a user on the display panel, and decreasing the intensity of feedback as the position of the specific content is located farther away from the user on the display panel, corresponding to the user input, wherein the three dimensional image includes a left image viewed by a user's left eye and a right image viewed by a user's right eye, and the disparity is a distance between the left image and the right image.

According to another aspect of the present invention, an apparatus for providing feedback corresponding to a user input in a portable terminal, in which feedback is provided in the portable terminal includes a display panel configured to display a three dimensional image;a touch panel configured to detect a touch of the user in the three dimensional image; an input unit configured to enter the user input in the three dimensional image; a feedback controller configured to extract a disparity of a specific content corresponding to the user input and determine at least one of an intensity of feedback and a pattern of feedback corresponding to the extracted disparity; and a feedback generation unit configured to generate a feedback according to the at least one of the determined intensity of feedback and pattern of feedback, wherein providing the feedback further comprises increasing the intensity of feedback as a position of the specific content is located closer to a user on the display panel, and decreasing the intensity of feedback as the position of the specific content is located farther away from the user on the display panel, corresponding to the user input,wherein the three dimensional image includes a left image viewed by a user's left eye and a right image viewed by a user's right eye, and the disparity is a distance between the left image and the right image.

**Advantageous Effects of Invention**

As described above, a method and an apparatus for providing feedback in a portable terminal according to an embodiment may provide an intuitive, cubical, and realistic feedback with respect to a user input generated in a three dimensional screen. Namely, when displaying the three dimensional screen, the present invention may provide not only a visual effect but also feedback using auditory, tactile, and olfactory senses. Accordingly, the present invention may provide a more realistic sense to the user when manipulating the three dimensional screen.

**Brief Description of Drawings**

The above and other aspects, features and advantages of the present invention will be more apparent from the following detailed description taken in conjunction with the accompanying drawings, in which:

FIG. 1 is a block diagram illustrating a configuration of a portable terminal according to an embodiment of the present invention;
FIGS. 2a and 2b are diagrams illustrating a principle of a three dimensional screen according to an embodiment of the present invention;
FIG. 3 is a flowchart diagram illustrating a method of providing feedback in a portable terminal according to an embodiment of the present invention;
FIG. 4 is a diagram illustrating a sample screen for providing feedback when a specific content is touched in a three dimensional screen according to an embodiment of the present invention;
FIG. 5 is a diagram illustrating a sample screen for providing feedback when a specific content is moved in a three dimensional screen according to an embodiment of the present invention; and
FIG. 6 is a diagram illustrating a sample screen for providing feedback when a layer is moved in a three dimensional screen comprising a plurality of layers according to an embodiment of the present invention.

**Mode for the Invention**

Hereinafter, various embodiments of the present invention are described in detail with reference to the accompanying drawings. In the following description, a portable terminal according to an embodiment of the present invention is a device equipped with a display panel for outputting a three dimensional screen and may be implemented as a Personal Digital Assistant (PDA), a mobile communication terminal, a smart phone, a tablet, a Personal Computer (PC), a laptop computer, a netbook, or a Portable Multimedia Player (PMP).

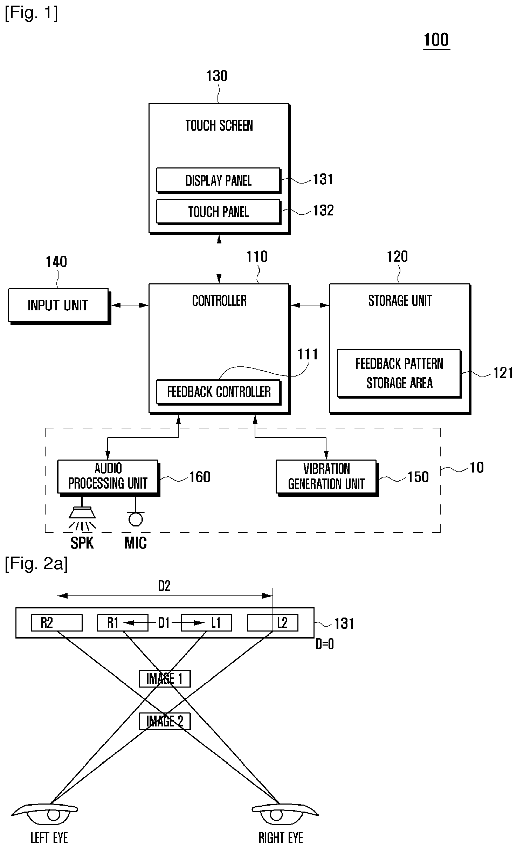

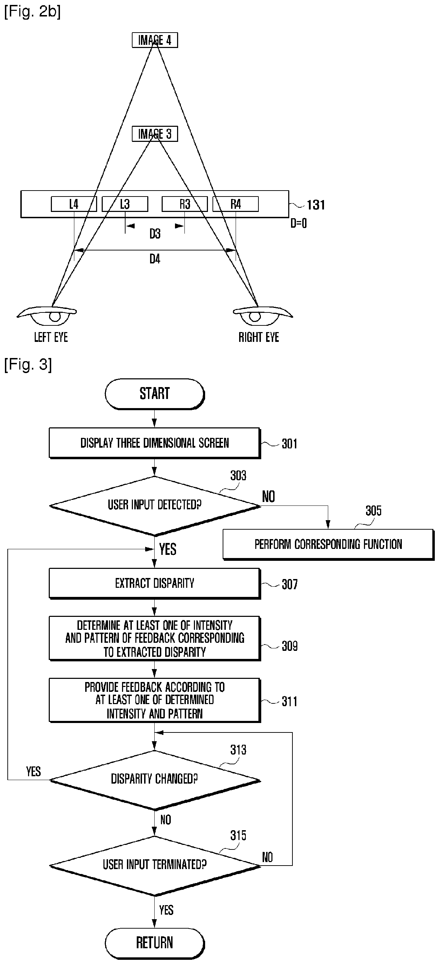

FIG. 1 is a block diagram illustrating a configuration of a portable terminal according to an embodiment of the present invention, and FIG. 2a and 2b is a diagram illustrating a principle of a three dimensional screen according to an embodiment of the present invention.

Referring to FIGS. 1 through 2b, a portable terminal 100 according to an embodiment of the present invention includes an audio processing unit 160, a vibration generation unit 150, an input unit 140, a touch screen 130, a storage unit 120 and a controller 110. The touch screen 130 includes a display panel 131 and a touch panel 132, and the controller 110 includes a feedback controller 111, and the storage unit 120 includes a feedback pattern storage area 121.

The touch screen 130 performs an input function and a display function. To this end, the touch screen 130 includes the display panel 131 and the touch panel 132.

The display panel 131 displays information inputted by a user or information provided to the user as well as various menus of the portable terminal 100. For example, the display panel 131 may provide various screens according to a use of the portable terminal 100 such as, for example, a home screen, a message writing screen, or a call screen. The display panel 131 may be implemented as, for example, a Liquid Crystal Display (LCD), an Organic Light Emitted Diode (OLED), or an Active Matrix Organic Light Emitted Diode (AMOLED). The display panel 131 according to the present invention may provide a three dimensional screen. The three dimensional screen is a screen that displays an image as if the image is located in a three dimensional space by using a principle that an image of an object is different when viewed with a left eye and a right eye. One method of displaying the three dimensional screen is by using special glasses, for example, polarized glasses, color filter glasses, or shutter glasses in which a left image is inputted only to the left eye and a right image is inputted only to the right eye. Another method of displaying the three dimensional screen is without the use of special glasses in which a lenticular lens or a parallax barrier is attached to the display panel 131 so that an image perceived by the user's left eye and right eye are different.

The principle of displaying the three dimensional image is described in detail with reference to FIG. 2a and 2b. In order to display a three dimensional image, the display panel 131 needs to display two images, i.e., an image viewed by the user's left eye (hereinafter, a "a left image") and an image viewed by the user's right eye (hereinafter, a a "right image"). The distance between the left image and the right image is called a disparity. Referring to FIG. 2a, in order to display a first three dimensional image 1 and a second three dimensional image 2 between the user and the display panel 131, a first left image L1 and a second left image L2 need to be displayed on a right side and a first right image R1 and a second right image R2 need to be displayed on a left side. When comparing a disparity D1 related to the first three dimensional image 1 and a disparity D2 related to the second three dimensional image 2, the three dimensional image having a greater disparity appears to be closer to the user, i.e., farther away from the display panel 131.

Conversely, referring to FIG. 2b, in order to display a third three dimensional image 3 and a fourth three dimensional image 4 behind the display panel 131, a third left image L3 and a fourth left image L4 need to be displayed on a left side and a third right image R3 and a fourth right image R4 need to be displayed on a right side. When comparing a disparity D3 related to the third three dimensional image 3 and a disparity D4 related to the fourth three dimensional image 4, the three dimensional image having a greater disparity appears to be farther away from the user and the display panel 131. Hereinafter, the disparity is described to be calculated based on a left image. In other words, when the three dimensional image is displayed between the user and the display panel 131, the disparity has a positive value and when the three dimensional image is displayed behind the display panel 131, the disparity has a negative value.

The touch panel 132 is mounted on an entire surface of the display unit 131 and when, for example, a user's finger or stylus contacts a touch input device, the touch panel 132 generates a touch event and transmit the generated touch event to the controller 110. Specifically, the touch panel 132 may detect a touch based on a change in a physical quantity such as, for example, capacitance or resistance in accordance with a contact with the touch input device and transmit information about a type of touch such as, for example, a touch, a double touch, a moving touch (e.g., drag, flick) or a multi-touch and information about a touch location to the controller 110. The touch panel 132 according to the present invention may detect a user input such as a touch or moving touch in the three dimensional screen and transmit the detected user input to the controller 110. Such a touch panel is known to a person having ordinary skill in the art, and thus, a detailed description thereof is omitted.

The input unit 140 may include input keys and function keys for receiving numeral or various character information, setting various functions, and controlling a function of the portable terminal 100. The input unit 140 according to the present invention may input various user input signals requesting to select a content, move a content, or move a content output area (hereinafter, a "layer") in the three dimensional screen. The input unit 140 may be formed as one of input means such as, for example, a button style keypad, a ball joystick, an optical joystick, a wheel key, a touch key, a touch pad, a touch screen, or a combination thereof.

The audio processing unit 160 may be formed as an acoustic part for transmitting and receiving an audio signal to perform encoding and decoding operations. The audio processing unit 160 may include a codec and an audio Amplifier (Amp). The audio processing unit 160 is connected with a Microphone (MIC) and a Speaker (SPK) and transmits data based on an audio signal inputted through the MIC to the controller 110 and converts an audio signal inputted from the controller 110 to an analog signal to be outputted to the speaker SPK. In addition, the audio processing unit 160 may output various audio signals such as, for example, an audio signal generated during reproducing an MP3 file or a video file through the speaker SPK. The audio processing unit 160 according to the present invention may provide an auditory feedback (e.g., output a sound) with respect to the user input in the three dimensional screen. The audio processing unit 160 outputs the sound at a different level and in a different pattern depending on the disparity. For example, the audio processing unit 160 outputs a sound at a relatively low level when content located farther away from the user, namely, content having a small disparity is selected, and outputs a sound at a relatively high level when content located close to the user, namely, content having a large disparity is selected. In addition, when a disparity of content or a layer selected from the three dimensional screen is continuously changing, the audio processing unit 160 may vary the volume of a first sound corresponding to a change in the disparity and, when the disparity becomes a certain value, for example, zero, the audio processing unit 160 may output a second sound for notifying such event.

The vibration generation unit 150 may provide a haptic feedback (e.g., output of vibration) with respect to the user input in the three dimensional screen. The vibration generation unit 150 may output the vibration at a different level and in a different pattern depending on the disparity. For example, the vibration generation unit 150 may generate a vibration at a relatively low level when content with a small disparity is selected and generate a vibration at a relatively high level when content with a large disparity is selected. Also, when the disparity of the content or the layer selected from the three dimensional screen is continuously changing, the vibration generation unit 150 may continuously vary the level of a first vibration pattern corresponding to a change in the disparity and, when the disparity becomes a certain value, for example, zero, the vibration generation unit 150 may output a second vibration pattern for notifying such an event.

The storage unit 120 may store a user data as well as a program required to perform a function according to an embodiment of the present invention. For example, the storage unit 120 may store a program for controlling an overall operation of the portable terminal 100, an Operating System (OS) for booting the portable terminal 100, application programs for performing optional functions of the portable terminal 100 such as, for example, a camera function, an image or video reproducing function, or a short range wireless communication function, and a plurality of content. Also, the storage unit 120 may store a key map or a menu map for operating the touch screen 130. The key map or the menu map may be implemented in various forms. For example, the key map may be a keyboard map, a 3 by 4 key map, a QWERTY key map, or a control key map for controlling operation of an application program currently being activated. The menu map may be utilized for controlling operation of the application program currently being activated.

The storage unit 120 according to an embodiment of the present invention may store a feedback control program for controlling feedback with respect to the user input in the three dimensional screen. To this end, the storage unit 120 may store an equation for calculating an intensity of feedback (for example, a vibration level and a sound level) according to the disparity. For example, the equation may be expressed as Equation (1) below.

$$\text{Intensity of feedback} = Z0 + K*D \ldots \text{Equation (1)}$$

Here, D denotes the disparity. As described above, the disparity is obtained based on the left image viewed by the left eye. Z0 is a constant value and can be preset as a default value of a feedback intensity when the disparity is zero. K is a proportionality constant and is preferably set to a value greater than zero. When the intensity of feedback is determined by Equation (1), the intensity of feedback may be increased as the content is located closer to the user and decreased as the content is located farther away from the user. Here, it is preferable to limit the minimum value of the intensity of feedback to be greater than zero in order to prevent the intensity of feedback from having a negative value. Alternatively, the above equation may be expressed as Equation (2) below.

$$\text{Feedback intensity} = Z0 - \lvert k*D \rvert \ldots \text{Equation (2)}$$

Referring to Equation (2), the intensity of feedback is greatest when the disparity is zero, i.e., the content is located on the display panel 131. Equation (2) may be used when displaying a plurality of content in a rotating manner. In other words, when the content is rotated to move to a position closest to the user, e.g., a center of the display panel 131, the feedback intensity may be increased and, when the content is moved farther away from the center of the display panel 131, the feedback intensity may be reduced.

The storage unit 120 may also store a table in which the disparity is mapped to the feedback pattern, as shown in Table 1 below. To this end, the storage unit 120 may include the feedback pattern storage area 121.

Table 1

[Table 1]

| Disparity (D) | Feedback Pattern |
|---------------|------------------|
| ... | ... |
| -3 | Pattern -3 |

(continued)

| Disparity (D) | Feedback Pattern |
|---|---|
| -2 | Pattern -2 |
| - 1 | Pattern -1 |
| 0 | Default Pattern / Second Pattern |
| 1 | Pattern 1 |
| 2 | Pattern 2 |
| 3 | Pattern 3 |
| ... | ... |

Referring to Table 1, each feedback pattern is mapped to a different disparity. Each pattern may include intensity information. Here, it is shown that two patterns, i.e., a default feedback pattern and a second feedback pattern are mapped to a predetermined reference disparity (D = 0). The default pattern intensity may be used as a value of Z0 in Equation (1) or Equation (2). The second feedback pattern is used to give feedback to the user in a circumstance when the disparity of the content is continuously changing in response to user input and the content is moved to a reference position (D=0). For example, when a content having a disparity of "-3" is moved to have a disparity of "0" according to user input (e.g., moving touch or movement of the portable terminal), the second feedback pattern can be used. The feedback pattern may include at least one of the haptic feedback that generates the vibration and the auditory feedback that outputs a sound. Also, the disparity at which the second feedback pattern is matched (e.g., "0") may be varied according to a designer's intent or the user's intent. Also, the second feedback pattern may be mapped to multiple disparities. For example, the second feedback pattern may be mapped to a disparity of "-3," a disparity of "0," and a disparity of "3." The second feedback patterns mapped to the disparity of (-3, 0, 3) may be set as the same pattern or different patterns.

The controller 110 controls an overall operation of the portable terminal 100 and a signal flow between internal blocks of the portable terminal 100. The controller 110 according to the present invention extracts a disparity of a corresponding image when the user input is detected in the three dimensional screen, determines a feedback pattern based on the extracted disparity, and provides the determined feedback pattern. To this end, the controller 110 includes a feedback controller 111.

The feedback controller 111 extracts a disparity of a corresponding content or layer when the user input is detected in the three dimensional screen. Next, the feedback controller 111 calculates an intensity of feedback corresponding to the extracted disparity by using Equation (1) or Equation (2). Alternatively, the feedback controller 111 may search a feedback pattern mapped to the extracted disparity from the storage unit 120. When the feedback intensity or the feedback pattern is determined, the feedback controller 111 may control such that the vibration generation unit 150 and the audio processing unit 160 provide the determined feedback. A detailed description thereof will be described below with reference to FIGS. 3 through 6.

The portable terminal 100 may include a motion sensor (not shown) capable of detecting a slope or movement of the portable terminal 100. The controller 110 may move a screen being outputted to the display panel 131 in correspondence with the slope or movement of the portable terminal 100 detected by the motion sensor (not shown). For example, when the user moves the portable terminal 100 farther away from the user, the controller 110 may display such that the screen is moved away from the user. Namely, the controller 110 may reduce the disparity.

In addition, although it is described in FIG. 1 that the feedback is provided through auditory and tactile senses, the present invention is not limited thereto. For example, the portable terminal 100 according to the present invention may provide an olfactory feedback by generating a strong scent corresponding to a content located closer to the user and a weak scent corresponding to a content located farther away from the user. Hereinafter, the audio processing unit 160, the vibration generation unit 150, and the scent sensor (not shown) are collectively referred to as a feedback generation unit 10.

Although not illustrated in FIG. 1, the portable terminal 100 according to the present invention may further selectively include other elements to provide additional functions, for example, a camera module for capturing an images or a video, a broadcast receiving module for receiving a broadcast data, a digital sound source reproducing module such as an MP3 module, and a proximity sensor module for proximity sensing. With the convergence of digital devices, there may be many other digital devices and modifications thereof, not listed herein, and, it will be appreciated that the portable terminal 100 according to the present invention may further include components that are equivalent to the elements described above.

FIG. 3 is a flowchart diagram illustrating a method of providing feedback in a portable terminal according to an embodiment of the present invention.

Referring to FIGS. 1 through 3, the controller 110 according to an embodiment of the present invention may display the three dimensional screen in Step 301. The three dimensional screen may be displayed by using glasses or without a need for glasses (glass-free or naked eye). Here, when using glasses, the user may wear, for example, the polarized glasses, the color filter glasses, or the shutter glasses. Conversely, when not using glasses (glass-free or naked eye), the display panel 131 may include the lenticular lens or the parallax barrier.

When the three dimensional screen is displayed as described above, the controller 110 may determine whether the user input is detected in Step 303. The user input may be entered through the touch panel 132. Alternatively, the user input may be generated in response to a key press of the keypad of the input unit 140. Alternatively, when the portable terminal 100 includes the motion sensor (not shown), the user input may be entered through the motion sensor (not shown). For example, the user input may be generated when a specific content outputted in the three dimensional screen is touched. Alternatively, the user input may be generated when a specific content in the three dimensional screen is touched and dragged or a gesture or a predetermined key input for requesting to move a layer located far away from the user to the reference position (D = 0) in the three dimensional screen composed of a plurality of layers. Alternatively, when the portable terminal 100 includes the motion sensor (not shown), the user input may be generated when the movement of the portable terminal 100, for example, a motion signal for moving the portable terminal toward the user is detected by the motion sensor (not shown).

When the user input is not detected, the controller 110 performs a corresponding function in Step 305 such as maintaining an output of the three dimensional screen or turning off the screen when there is no input during a predetermined period of time. Conversely, when the user input is detected, the controller 110 extracts a disparity of a specific content or a specific content output area (hereinafter, "layer") corresponding to the user input in Step 307. When the disparity is extracted, the controller 110 may determine at least one of the feedback intensity and the pattern corresponding to the extracted disparity in Step 309. To this end, the controller 110 may calculate the feedback intensity by using Equation (1) or Equation (2) or determine the pattern mapped to the extracted disparity by searching Table 1.

When at least one of the feedback intensity and the pattern is determined, the controller 110 may control the feedback generation unit 10 to provide feedback according to at least one of the determined feedback intensity and the pattern determined in Step 311. For example, the controller 110 may control the vibration generation unit 150 to generate a vibration in the determined feedback intensity and the pattern or control the audio processing unit 160 to output the sound in the determined feedback intensity and the feedback pattern. Alternatively, the controller 110 may control to generate the vibration as well as outputting a sound at the same time in the determined feedback intensity and the feedback pattern. The feedback may be provided during a predetermined time period after the user input is detected or until a predetermined condition is satisfied, for example, the user input is released or the disparity becomes "0," according to the designer's intent.

Next, the controller 110 may identify whether the disparity is changed in Step 313. The disparity change may be generated when the user touches and drags a specific content or a specific layer is requested to move to the reference position by the key input or the motion sensor. When the disparity is changed, the controller 110 returns to Step 307 to repeat the above steps. Conversely, when the disparity is not changed, the controller 110 determines whether the user input is terminated in Step 315. When the user input is entered by a touch, the user input may be terminated when the touch is released. Alternatively, the user input may be terminated when a predetermined condition is satisfied. When the user input is not terminated, the controller 110 may return to Step 313 to repeat the above steps, and when the user input is terminated, the controller 110 may return to Step 301.

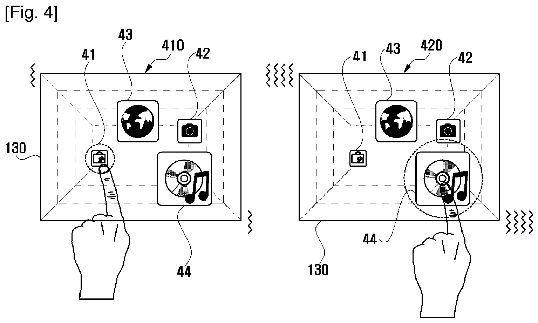

FIG. 4 is a diagram illustrating a sample screen for providing feedback when a specific content is touched in a three dimensional screen according to an embodiment of the present invention. Hereinafter, feedback is provided as a vibration for illustrative purposes, as one example of feedback .

The touch screen 130 of FIG. 1 displays a plurality of content such as content 41, 42, 43 and 44 of FIG.4, having different disparities in the three dimensional screen under the control of the controller 110 as illustrated in sample screen 410. Here, it is assumed that the disparity of a first content 41 is mapped to a vibration pattern having a first level, a second content 42 is mapped to a vibration pattern having a second level, a third content 43 is mapped to a vibration pattern having a third level, and a fourth content 44 is mapped to a vibration pattern having a fourth level, respectively.

As such, when the user touches the first content 41 that is located farthest from the user, as illustrated in the sample screen 410, the feedback controller 111 may control the vibration generation unit 150 to generate the vibration pattern having the first level. When the user touches the fourth content 44, as illustrated in the sample screen 420, the feedback controller 111 may control the vibration generation unit 150 to generate the vibration pattern having the fourth level. Thus, when a content is touched in the three dimensional screen, the present invention may provide a different vibration level according to the disparity of the content, thereby providing more realistic feedback.

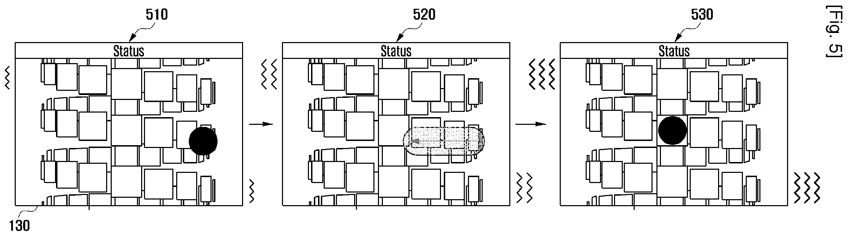

FIG. 5 is a diagram illustrating a sample screen for providing feedback when a specific content is moved in a three dimensional screen according to an embodiment of the present invention.

Referring to FIGS. 1 through 5, as illustrated in the sample screen 510, the touch screen 130 may display a three dimensional screen in which a plurality of the content are disposed in a spiral manner under the control of the controller 110. Here, as already described with reference to FIG. 4, the plurality of the content are respectively mapped to vibration patterns having different levels according to the disparity.

As illustrated in the sample screen 510, when the user touches a specific content in the three dimensional screen, the feedback controller 111 may control the vibration generation unit 150 to generate a vibration having a level corresponding to the disparity of a content at a touched point. Next, as illustrated in sample screens 520 and 530, when the user moves a touch position (i.e., performs a drag operation) to the left in order to rotate the three dimensional screen, the feedback controller 111 may control the vibration generation unit 150 to change the vibration level corresponding to a change of disparity according to the moving touch input. For example, as illustrated in the sample screens 510 through 530, the feedback controller 111 may control the vibration generation unit 150 to increase a vibration level from a first intensity of feedback to a second intensity of feedback and a third intensity of feedback corresponding to the moving touch input. Thus, when the disparity is changed in correspondence with the content movement in the three dimensional screen, the present invention may change and provide the vibration level in real time so that a more realistic feedback may be provided.

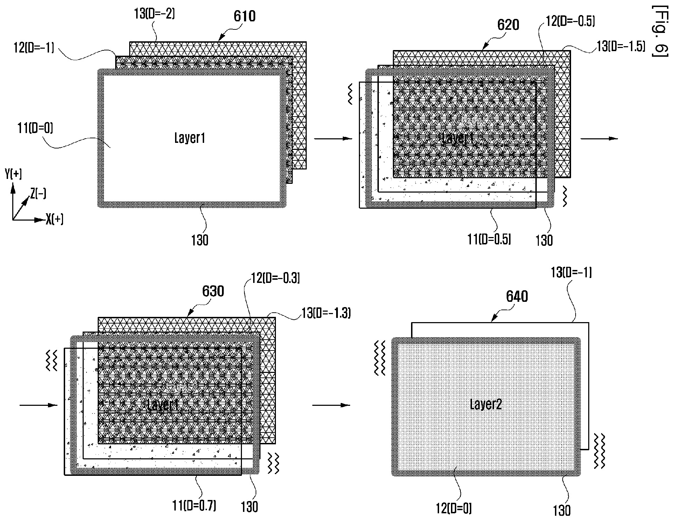

FIG. 6 is a diagram illustrating a sample screen for providing feedback when a layer is moved in a three dimensional screen comprising a plurality of layers according to an embodiment of the present invention. Hereinafter, for illustrative purposes, an example in which a three dimensional screen is composed of three layers is described below.

Referring to FIGS. 1 through 6, the touch screen 130 may display a three dimensional screen composed of three layers (11, 12, 13) as illustrated in a sample screen 610. Here, it is assumed that a first layer 11 has a disparity of "0," a second layer 12 has a disparity of "-1," and a third layer 13 has a disparity of "-3."

As illustrated in the sample screen 610, when the user input requesting to move the second layer 12 to a position of the first layer 11, the touch screen 130 may gradually move the first layer 11 through the third layer 13 in a positive Z-axis direction, as illustrated in sample screens 620, 630 and 640. Here, as illustrated in the sample screens indicated by the identification numbers 620 and 630, during when the first layer 11 through the third layer 13 are moved, the feedback controller 110 may generate a first vibration pattern of which first level is increased from a first level to a second level. As illustrated in the sample screen 640, when the disparity of the second layer 12 is "0," the feedback controller 111 may control the vibration generation unit 150 to generate a predetermined second vibration pattern. Thus, the present invention may change a level of the first vibration pattern according to a movement of a layer in the three dimensional screen composed of a plurality of layers and, when the moved layer reaches the reference position having a predetermined disparity, the second vibration pattern is generated such that the user may easily recognize that the layer is moved to the reference position.

FIGS. 4 through 6 describe a case where tactile feedback using a vibration is provided. However, the present invention is not limited to this. For example, the present invention may provide auditory feedback using a sound and olfactory feedback using a scent may be provided together.

The foregoing method for providing feedback in a portable terminal of the present invention may be implemented in an executable program command form by various computer means and be recorded in a computer readable recording medium. In this case, the computer readable recording medium may include a program command, a data file, and a data structure individually or a combination thereof. In the meantime, the program command recorded in a recording medium may be specially designed or configured for the present invention or be known to a person having ordinary skill in a computer software field to be used.

The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated as at least one software module to perform an operation of the present invention.

Although various embodiments of the present invention have been described in detail herein, many variations and modifications may be made without departing from the scope of the present invention, as defined by the appended claims.

## Claims

1. A method of providing feedback corresponding to a user input_in a portable terminal(100), in which feedback is provided in the portable terminal(100), the method comprising:

    displaying(301) a three dimensional image on a display panel(131);

determining(303) by a touch panel(132) or an input unit(140) whether the user input corresponding to a content in the three dimensional image is detected;

extracting(307), by a feedback controller(111) when the user input is detected, a disparity of a specific content corresponding to the detected user input;

determining(309) by the feedback controller(lll) at least one of an intensity of feedback and a pattern of feedback corresponding to the extracted disparity; and

providing(311) by a feedback generation unit(10) feedback according to the determination,

wherein the three dimensional image includes a left image viewed by a user's left eye and a right image viewed by a user's right eye, and the disparity is a distance between the left image and the right image,

**characterised in that** providing(311) the feedback further comprises increasing the intensity of feedback as a position of the specific content is located closer to a user on the display panel(131), and decreasing the intensity of feedback as the position of the specific content is located farther away from the user on the display panel(131), corresponding to the user input.

2. The method according to claim 1, wherein the user input is generated when detecting at least one of a touch, in the three dimensional image displayed on the display panel (131), and a key input detected by a keypad in the portable terminal(100).

3. The method according to claim 1, wherein determining the intensity of feedback further comprises one of:

calculating the intensity of feedback by using a predefined mathematical equation; and
searching a table in which the disparity and feedback pattern of feedback mapped thereto are prestored, wherein the mathematical equation is expressed as below,

$$\text{Feedback intensity} = ZO - \left| k * D \right|,$$

the D denotes the disparity, the ZO is a constant value and is preset as a default value of a feedback intensity when the disparity is zero, and the K is a proportionality constant value and is set to a value greater than zero.

4. The method according to claim 1, wherein the feedback include a tactile feedback using a vibration.

5. An apparatus for providing feedback corresponding to a user input_in a portable terminal(100), in which feedback is provided in the portable terminal(100), the apparatus comprising:

a display panel(131) configured to display a three dimensional image;
a touch panel(132) configured to detect a touch of the user in the three dimensional image;
an input unit(140) configured to enter the user input in the three dimensional image;
a feedback controller(111) configured to extract a disparity of a specific content corresponding to the user input and determine at least one of an intensity of feedback and a pattern of feedback corresponding to the extracted disparity; and
a feedback generation unit(10) configured to generate a feedback according to the at least one of the determined intensity of feedback and pattern of feedback,
wherein the three dimensional image includes a left image viewed by a user's left eye and a right image viewed by a user's right eye, and the disparity is a distance between the left image and the right image,

**characterised in that** providing(311) the feedback further comprises increasing the intensity of feedback as a position of the specific content is located closer to a user on the display panel(131), and decreasing the intensity of feedback as the position of the specific content is located farther away from the user on the display panel(131), corresponding to the user input.

6. The apparatus according to claim 5, wherein the input unit(140) include a keypad for entering a key input in the portable terminal(100).

7. The apparatus according to claim 5, wherein the feedback generation unit(10) includes at least one of:

an audio output unit(160) configured to output auditory feedback;
a vibration generation unit(150) configured to generate tactile feedback.

8. The apparatus according to claim 5, wherein, when the disparity is changed, the feedback controller(111) controls the feedback generation unit(10) to change the at least one of the intensity of feedback and the pattern of feedback according to a change of the disparity.

9. The apparatus according to claim 5, further comprising:
a storage unit(120) including a table in which the disparity and a feedback pattern mapped thereto are stored and a feedback pattern storage area in which the other feedback is stored.

10. The apparatus according to claim 9, wherein the feedback controller(111) is configured to calculate the intensity of feedback by using a predefined mathematical equation or determine the pattern of feedback by searching the table.

**Patentansprüche**

1. Verfahren zum Bereitstellen einer Rückmeldung, die einer Benutzereingabe entspricht, in einem tragbaren Endgerät (100), wobei die Rückmeldung in dem tragbaren Endgerät (100) bereitgestellt wird, wobei das Verfahren Folgendes umfasst:

   Anzeigen (301) eines dreidimensionalen Bildes auf einem Anzeigefeld (131);
   Bestimmen (303), von einem Berührungsfeld (132) oder einer Eingabeeinheit (140), ob die Benutzereingabe, die einem Inhalt in dem dreidimensionalen Bild entspricht, erkannt wird;
   Extrahieren (307), von einer Rückmeldungssteuerung (111), wenn die Benutzereingabe erkannt wird, einer Disparität eines spezifischen Inhalts, der der erkannten Benutzereingabe entspricht;
   Bestimmen (309), von der Rückkopplungssteuerung (111), mindestens einer Rückkopplungsintensität und eines Rückkopplungsmusters, das der extrahierten Disparität entspricht; und
   Bereitstellen (311), von einer Rückkopplungsgenerierungseinheit (10), einer Rückmeldung gemäß der Bestimmung,
   wobei das dreidimensionale Bild ein linkes Bild, das von dem linken Auge eines Benutzers betrachtet wird, und ein rechtes Bild aufweist, das von dem rechten Auge eines Benutzers betrachtet wird, und die Disparität ein Abstand zwischen dem linken Bild und dem rechten Bild ist,
   **dadurch gekennzeichnet, dass** das Bereitstellen (311) der Rückmeldung ferner das Erhöhen der Intensität der Rückmeldung, wenn sich eine Position des spezifischen Inhalts näher an einem Benutzer auf dem Anzeigefeld (131) befindet, und das Verringern der Intensität der Rückmeldung, wenn sich die Position des spezifischen Inhalts weiter entfernt vom Benutzer auf dem Anzeigefeld (131) befindet, entsprechend der Benutzereingabe umfasst.

2. Verfahren nach Anspruch 1, wobei die Benutzereingabe generiert wird, wenn in dem dreidimensionalen Bild, das auf dem Anzeigefeld (131) angezeigt wird, mindestens eine von einer Berührung und einer Tasteneingabe erkannt wird, die von einer Tastatur in dem tragbaren Endgerät (100) erkannt wird.

3. Verfahren nach Anspruch 1, wobei das Bestimmen der Intensität der Rückkopplung ferner eines von Folgendem umfasst:

   Berechnen der Intensität der Rückkopplung unter Verwendung einer vordefinierten mathematischen Gleichung; und
   Durchsuchen einer Tabelle, in der das Disparitäts- und Rückkopplungsmuster der Rückkopplung, die diesem zugeordnet ist, vorgespeichert ist,
   wobei die mathematische Gleichung wie folgt ausgedrückt ist:

$$\text{Rückkopplungsintensität} = ZO - |\, k * D \,|,$$

   wobei das D die Disparität bezeichnet, das ZO ein konstanter Wert ist und als ein Standardwert einer Rückkopplungsintensität voreingestellt ist, wenn die Disparität Null ist, und K ein Proportionalitätskonstantenwert ist und auf einen Wert größer als Null eingestellt ist.

4. Verfahren nach Anspruch 1, wobei die Rückmeldung eine taktile Rückmeldung unter Verwendung einer Vibration aufweist.

5. Vorrichtung zum Bereitstellen einer Rückmeldung, die einer Benutzereingabe entspricht, in einem tragbaren Endgerät (100), wobei die Rückmeldung in dem tragbaren Endgerät (100) bereitgestellt wird, wobei die Vorrichtung Folgendes umfasst:

ein Anzeigefeld (131), das konfiguriert ist, ein dreidimensionales Bild anzuzeigen;
ein Berührungsfeld (132), das konfiguriert ist, eine Berührung des Benutzers in dem dreidimensionalen Bild zu erkennen;
eine Eingabeeinheit (140), die konfiguriert ist, die Benutzereingabe in das dreidimensionale Bild einzugeben;
eine Rückkopplungssteuerung (111), die konfiguriert ist, eine Disparität eines spezifischen Inhalts entsprechend der Benutzereingabe zu extrahieren und mindestens eines einer Rückkopplungsintensität und eines Rückkopplungsmusters entsprechend der extrahierten Disparität zu bestimmen; und
eine Rückkopplungsgenerierungseinheit (10), die konfiguriert ist, eine Rückmeldung gemäß dem mindestens einen der bestimmten Rückkopplungsintensität und des Rückkopplungsmusters zu generieren,
wobei das dreidimensionale Bild ein linkes Bild, das von dem linken Auge eines Benutzers betrachtet wird, und ein rechtes Bild aufweist, das von dem rechten Auge eines Benutzers betrachtet wird, und die Disparität ein Abstand zwischen dem linken Bild und dem rechten Bild ist,
**dadurch gekennzeichnet, dass** das Bereitstellen (311) der Rückmeldung ferner das Erhöhen der Intensität der Rückmeldung, wenn sich eine Position des spezifischen Inhalts näher an einem Benutzer auf dem Anzeigefeld (131) befindet, und das Verringern der Intensität der Rückmeldung, wenn sich die Position des spezifischen Inhalts weiter entfernt vom Benutzer auf dem Anzeigefeld (131) befindet, entsprechend der Benutzereingabe umfasst.

6. Vorrichtung nach Anspruch 5, wobei die Eingabeeinheit (140) eine Tastatur zum Eingeben einer Tasteneingabe in das tragbare Endgerät (100) umfasst.

7. Vorrichtung nach Anspruch 5, wobei die Rückkopplungsgenerierungseinheit (10) mindestens eines von Folgendem umfasst:

eine Audioausgabeeinheit (160), die konfiguriert ist, eine akustische Rückmeldung auszugeben;
eine Vibrationsgenerierungseinheit (150), die konfiguriert ist, eine taktile Rückmeldung zu generieren.

8. Vorrichtung nach Anspruch 5, wobei, wenn die Disparität geändert wird, die Rückkopplungssteuerung (111) die Rückkopplungsgenerierungseinheit (10) steuert, um mindestens eines der Rückkopplungsintensität und des Rückkopplungsmusters gemäß einer Änderung der Disparität zu ändern.

9. Vorrichtung nach Anspruch 5, ferner umfassend:
eine Speichereinheit (120), die eine Tabelle aufweist, in der die Disparität und ein Rückkopplungsmuster, die diesem zugeordnet sind, gespeichert sind, und einen Rückkopplungsmuster-Speicherbereich, in dem die andere Rückkopplung gespeichert ist.

10. Vorrichtung nach Anspruch 9, wobei die Rückkopplungssteuerung (111) konfiguriert ist, die Intensität der Rückkopplung zu berechnen, indem eine vordefinierte mathematische Gleichung verwendet wird oder das Rückkopplungsmuster durch Durchsuchen der Tabelle bestimmt wird.

**Revendications**

1. Procédé pour fournir une rétroaction correspondant à une entrée d'utilisateur dans un terminal portable (100), dans lequel une rétroaction est fournie dans le terminal portable (100), le procédé comprenant :

l'affichage (301) d'une image tridimensionnelle sur un panneau d'affichage (131) ;
la détermination (303), par un panneau tactile (132) ou une unité d'entrée (140), si l'entrée d'utilisateur correspondant à un contenu dans l'image tridimensionnelle est détectée ;

l'extraction (307), par un organe de commande de rétroaction (111), lorsque l'entrée d'utilisateur est détectée, d'une disparité d'un contenu spécifique correspondant à l'entrée d'utilisateur détectée ;

la détermination (309), par l'organe de commande de rétroaction (111), d'au moins l'un d'une intensité de rétroaction et d'un motif de rétroaction correspondant à la disparité extraite ; et

la fourniture (311), par une unité de génération de rétroaction (10), d'une rétroaction en fonction de la détermination,

dans lequel l'image tridimensionnelle comprend une image gauche visualisée par un oeil gauche d'un utilisateur et une image droite visualisée par un oeil droit d'un utilisateur, et la disparité est une distance entre l'image gauche et l'image droite,

**caractérisé en ce que** la fourniture (311) de la rétroaction comprend en outre l'augmentation de l'intensité de rétroaction au fur et à mesure qu'une position du contenu spécifique est située plus près d'un utilisateur sur le panneau d'affichage (131), et la réduction de l'intensité de rétroaction au fur et à mesure que la position du contenu spécifique est située plus loin de l'utilisateur sur le panneau d'affichage (131), correspondant à l'entrée d'utilisateur.

2. Procédé selon la revendication 1, dans lequel l'entrée d'utilisateur est générée lors de la détection d'au moins l'un d'un toucher dans l'image tridimensionnelle affichée sur le panneau d'affichage (131), et d'une entrée de touche détectée par un clavier dans le terminal portable (100).

3. Procédé selon la revendication 1, dans lequel la détermination de l'intensité de rétroaction comprend en outre l'un de :

le calcul de l'intensité de rétroaction en utilisant une équation mathématique prédéfinie ; et
la recherche dans une table dans laquelle sont préalablement mémorisés la disparité et le motif de rétroaction mis en concordance l'un avec l'autre,
dans lequel l'équation mathématique est exprimée comme suit :

$$\text{Intensité de rétroaction} = ZO - |k*D|,$$

où D représente la disparité, ZO est une valeur constante qui est préréglée en tant que valeur par défaut d'une intensité de rétroaction lorsque la disparité est nulle, et K est une valeur constante de proportionnalité qui est réglée à une valeur supérieure à 0.

4. Procédé selon la revendication 1, dans lequel la rétroaction comprend une rétroaction tactile en utilisant une vibration.

5. Appareil pour fournir une rétroaction correspondant à une entrée d'utilisateur dans un terminal portable (100), dans lequel une rétroaction est fournie dans le terminal portable (100), l'appareil comprenant :

un panneau d'affichage (131) configuré pour l'affichage d'une image tridimensionnelle ;
un panneau tactile (132) configuré pour la détection d'un toucher de l'utilisateur dans l'image tridimensionnelle ;
une unité d'entrée (140) configurée pour l'entrée de l'entrée d'utilisateur dans l'image tridimensionnelle ;
un organe de commande de rétroaction (111) configuré pour l'extraction d'une disparité d'un contenu spécifique correspondant à l'entrée d'utilisateur et la détermination d'au moins l'un d'une intensité de rétroaction et d'un motif de rétroaction correspondant à la disparité extraite ; et
une unité de génération de rétroaction (10) configurée pour la génération d'une rétroaction en fonction de l'au moins un de l'intensité de rétroaction déterminée et du motif de rétroaction déterminé,
dans lequel l'image tridimensionnelle comprend une image gauche visualisée par un oeil gauche d'un utilisateur et une image droite visualisée par un oeil droit d'un utilisateur, et la disparité est une distance entre l'image gauche et l'image droite,
**caractérisé en ce que** la fourniture (311) de la rétroaction comprend en outre l'augmentation de l'intensité de rétroaction au fur et à mesure qu'une position du contenu spécifique est située plus près d'un utilisateur sur le panneau d'affichage (131), et la réduction de l'intensité de rétroaction au fur et à mesure que la position du contenu spécifique est située plus loin de l'utilisateur sur le panneau d'affichage (131), correspondant à l'entrée d'utilisateur.

6. Appareil selon la revendication 5, dans lequel l'unité d'entrée (140) comprend un clavier pour l'entrée d'une entrée de touche dans le terminal portable (100).

**7.** Appareil selon la revendication 5, dans lequel l'unité de génération de rétroaction (10) comprend au moins l'un de :

une unité de sortie audio (160) configurée pour délivrer une rétroaction auditive ;
une unité de génération de vibration (150) configurée pour générer une rétroaction tactile.

**8.** Appareil selon la revendication 5, dans lequel, lorsque la disparité est changée, l'organe de commande de rétroaction (111) commande à l'unité de génération de rétroaction (10) de changer l'au moins un de l'intensité de rétroaction et du motif de rétroaction en fonction d'un changement de la disparité.

**9.** Appareil selon la revendication 5, comprenant en outre :
une unité de mémorisation (120) comprenant une table dans laquelle sont mémorisés la disparité et un motif de rétroaction mis en concordance l'un avec l'autre, et une zone de mémorisation de motif de rétroaction dans laquelle l'autre rétroaction est mémorisée.

**10.** Appareil selon la revendication 9, dans lequel l'organe de commande de rétroaction (111) est configuré pour calculer l'intensité de rétroaction en utilisant une équation mathématique prédéfinie ou pour déterminer le motif de rétroaction en effectuant une recherche dans la table.

[Fig. 1]

**100**

[Fig. 2a]

[Fig. 2b]

IMAGE 4

IMAGE 3

| L4 | L3 | R3 | R4 | ~131

D=0

D3

D4

LEFT EYE

RIGHT EYE

[Fig. 3]

START

DISPLAY THREE DIMENSIONAL SCREEN ~301

USER INPUT DETECTED? 303

NO

PERFORM CORRESPONDING FUNCTION 305

YES

EXTRACT DISPARITY ~307

DETERMINE AT LEAST ONE OF INTENSITY
AND PATTERN OF FEEDBACK CORRESPONDING ~309
TO EXTRACTED DISPARITY

PROVIDE FEEDBACK ACCORDING TO
AT LEAST ONE OF DETERMINED ~311
INTENSITY AND PATTERN

YES

DISPARITY CHANGED? 313

NO

USER INPUT TERMINATED? 315

NO

YES

RETURN

[Fig. 4]

[Fig. 5]

[Fig. 6]

12[D=-1]    13[D=-2]    610

11[D=0]

Layer1

Y[+]
Z[-]
X[+]

130

620    12[D=-0.5]
13[D=-1.5]

Layer1

11[D=0.5]    130

630    12[D=-0.3]
13[D=-1.3]

Layer1

11[D=0.7]    130

640    13[D=-1]

Layer2

12[D=0]    130

EP 2 734 911 B1

18

**EP 2 734 911 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009028921 A2